# EUROPEAN PATENT APPLICATION

(11) **EP 3 061 883 A1**
(43) Date of publication of application: **31.08.2016**
(21) Application number: 16157482.7
(22) Date of filing: 25.02.2016
(51) Int. Cl.: E04D 11/00

(54) **TURF ROOF**

(30) Priority: 26.02.2015 GB 201503229
(71) Applicant: Baddeley, Timothy William Gerald, Bradford on Avon, Wiltshire BA15 2HW (GB)
(72) Inventor: Baddeley, Timothy William Gerald, Bradford on Avon, Wiltshire BA15 2HW (GB)
(74) Representative: Pearson, James Ginn

(57) **Abstract**

An eco-build building roof structure (100; 400), and a method for building the same, are described. The roof structure (100; 400) has a turf finish (421). The roof structure (100; 400) comprises a waterproofing structure (101; 401) and a support structure (102; 402) for supporting the turf finish (421). The support structure may comprise lengths of recycled vehicle tyres (406). There is also a watering layer (103; 403) between the waterproofing structure (101; 401) and the turf finish (421) for supplying water to the turf finish, optionally via one or more pipes (416).

## Description

### Field of the Invention

The present invention concerns roof structures. More particularly, but not exclusively, this invention concerns hydroponic turf roof structures. The invention also concerns methods for building a roof structure.

### Background of the Invention

Eco-build projects are an attractive proposition not only because of the low environmental impact but also because of the potential cost savings to be made. One aspect of an eco-build building which is of importance is the roof. It would be desirable for the roof of an eco-build building to utilise recycled materials, have an attractive appearance, have strength, have good drainage, and be cheap and easy to construct.

Turf roofs are popular in eco-build projects. They serve several functions: they remove dust particles from urban air, they do not contribute to heating of the city on hot days, and they provide some respite for wildlife. In all these respects they perform better than the more common sedum roof. They have at least two drawbacks: one is that they are significantly heavier than a normal roof covering because of the amount of top soil required for the growth of the turf and so normally require a stronger support; the other is that in times of drought they can look unsightly. This latter point makes them less suitable for hot countries and also makes them more maintenance-heavy during the summer in other countries.

The present invention seeks to mitigate one or more of the above-mentioned problems. Alternatively or additionally, the present invention seeks to provide a lightweight turf roof structure with an improved feeding arrangement.

### Summary of the Invention

According to the first aspect of the present invention, there is provided a roof structure forming part of an eco-build building. The roof structure is covered with a turf finish. The roof structure comprises a waterproofing structure; a support structure arranged to support the turf finish and a watering layer arranged between the waterproofing structure and the turf finish and which is arranged such that the watering layer supplies water to the turf finish.

The term "turf finish" is used herein to refer to any live plant finish, including but not limited to a grass turf finish, a sedum turf finish, a green turf finish or a combination thereof. The term "turf finish" also includes any base layers, for example soil layers, of the turf finish, whether coming with the roots of the plant or added separately.

It may be that the roof structure of embodiments of the present invention not only makes a turf roof lighter, but also make the turf roof (conversion or new-build) a possibility in those areas where summer sees little rainfall. By having a watering layer, it is possible to get water exclusively to the roots and to feed the turf finish with water from underneath the support structure over a sustained period, thereby encouraging the establishment of a healthy root system for the turf finish, which in turn allows a lightweight turf finish to be used. Preferably, the weight of the turf finish (including the weight of any soil, or other material for supporting the turf roof system layer) is equal to or less than 200 kg per square meter. More preferably, the weight of the turf finish is equal to or less than 140 kg per square meter. The turf finish has a soil layer. Preferably, the soil layer has a maximum thickness of no more than 100mm, more preferably of no more than 70mm, for example of no more than 50mm. A well-established turf finish may also reduce the chance of turf slipping or moving.

The watering layer may act as a reservoir which harvests rainwater or excess irrigative water for domestic consumption. The term "water" is used herein to refer to any liquid composition suitable for feeding the turf finish, for example but not limited to rainwater, domestic main water, irrigative water and/or recycled domestic waste water. The watering layer may also permit grey and black sewage water to be treated and disposed of onto the roof. Used in conjunction with water purification technology, the roof structure according to the present invention may be part of the solution to making a building independent of the municipal water supply. It is believed that in the coming years, Europe will become much hotter and drier and that water shortages will become an issue as climate change progresses. The roof structure of embodiments of the present invention may be beneficial in view of the potential water shortages.

Normally a turf roof would be watered from above. The roof structure of embodiments of the present invention allows watering from the roots by the watering layer. It is found that this arrangement may have two advantages: one is that less water is lost through evaporation in the soil, since water is stored under the turf and most of what is not absorbed is retained with the watering layer; the second is that it reduces the chance of the soil being polluted by a rogue chemical in the water (e.g. bleach or a build-up of salts), and the watering layer can be washed through if necessary.

Optionally, the roof structure may be a pitched roof structure. The roof structure may be pitched to a degree of between 2 and 60 degrees. It is sometimes desirable to have a pitched roof structure because it may assist the drainage of excess water on the roof by having the water trickle down the pitched roof. The lightweight turf roof structure of the present invention allows a larger degree of pitch to be achieved without having a turf slip or turf movement. Preferably, the roof structure according to the present invention is pitched to a degree of more than 5 degrees, more preferably of more than 10 degrees, for example of more than 15 degrees.

Optionally, the waterproofing structure further comprises a multiplicity of rafters, for example extending from the centre of the roof to the edge of the roof. This arrangement provides for initial support for the roof structure. Optionally, the waterproofing structure comprises a waterproof membrane fixed upon the rafters across the roof. Preferably, the waterproof membrane is made of polythene.

Preferably, the multiplicity of rafters are arranged substantially in parallel with each other. The distance between two adjacent rafters (centre to centre) may be at least 30cm, preferably at least 50 cm, for example about 60 cm. This arrangement allows the waterproof membrane to sag generously between the rafters and to form the principle drainage channel.

The watering layer supplies water to the turf finish. Optionally, the watering layer is a void defined by the water-proofing structure and the supporting structure. The watering layer may be used to harvest and store the rainwater. The watering layer may also be used to receive water fed through other means, for example, through a pipe.

Optionally, the watering layer comprises a water-retaining material. Preferably, the water-retaining material comprises a multiplicity of pores and channels (for example relatively small of pores and channels, for example of the order of millimetres in diameter or width) allowing water to circulate through them. Preferably, the water-retaining layer comprises open pores suitable for the roots of the turf finish to grow into. In this way, the roots of the turf finish are bond with the watering layer as they seek it out for nutrients, which helps the establishment of the turf finish. The watering layer is capable of storing and releasing water for feeding the turf finish. Preferably, the watering layer comprises a sponge-like material. Spongy material is flexible, easy to wash and light weight (during installation). The sponge-like material may comprise old (recycled) carpet material, which can provide a means of reusing such carpet material. Optionally, the watering layer comprises one or more layers of capillary mat. Capillary mats are light and flexible with excellent water retaining and feeding capacities.

The watering layer may be fed with water by means of one or more structures that are integrated within the watering layer. Said one or more structures may be arranged to receive water from a supply of water outside of the watering layer. Said one or more structures may be arranged to distribute water across the watering layer, for example by conveying water from one location to another (for example under the power of water pressure or gravity). Said one or more structures may comprise a network of pipes. Some of the water within the watering layer may be conveyed by means such as capillary action.

Preferably, the watering layer is fed by one or more pipes. In this way, it is possible to feed water into the watering layer by the one or two pipes. It is also possible to wash the watering layer by the one or more pipes. Optionally, the one or more pipes are arranged along the centre of the roof. Alternatively, the one or more pipes are arranged substantially parallel to the rafters between two adjacent rafters. Optionally, the one or more pipes have a multiplicity of holes on the pipe walls. In this way, it is possible to feed water to the watering layer through the holes. On a pitched roof, the pitch of the roof may enable the water to trickle down the watering layer and spread across the area of the roof structure.

Optionally, the one or more pipes are sandwiched in two layers of sheeting material. In one embodiment of the present invention, the sheeting material is plastic membrane. It is important that the sheeting material is water tight towards the roof rafter side while is water penetrable towards the turf finish side. By having this configuration, it is possible to feed water to the watering layer and, subsequently, to the turf finish, from the pipes without water leaking into the inside of the house via the roof structure.

Preferably, the support structure comprises a first layer and a second layer. It may be that lengths of a first material of the first layer are arranged in a first direction. It may be that lengths of a second material of the second layer are arranged in a second direction. The second direction is transverse to the first direction. The turf finish may be supported by the second layer. The second layer may be supported by the first layer. The lengths of material of the second layer may be transverse to the pitch of the roof. By having the second material arranged transverse to the first material, it provides some resistance to the potential sliding of the turf finish, soil and roots. The roots may bond for example with the pattern into the support layer. Optionally, the first layer comprises a multiplicity of lengths of the first material and the second layer comprises a multiplicity of lengths of the second material. The multiplicity of lengths of the first material may be arranged along the centre of the roof. Optionally, the multiplicity of lengths of the first material may be arranged lateral to the rafters. In this way the rafter and the support structure together provides a strengthened roof structure. Optionally, the multiplicity of lengths of the first material is notched to straddle the rafters and pinch in place the watering layer or the waterproof membrane, as might be provided. The first material may be different from the second material.

Preferably, the multiplicity of lengths of the second material is arranged so that the distance between two adjacent lengths is between 5mm to 30mm, preferably between 8mm to 20mm, for example 10mm. This gap enables a small amount of soil to fall through onto the watering layer. This is to encourage the roots to grow into the support structure and seek moisture from the watering layer underneath.

Preferably, the multiplicity of lengths of the first material is arranged so that the distance between two adjacent lengths is between 5mm to 20mm, preferably between 8mm to 15mm, for example 10mm. In this way, the supporting structure further provides gaps to encourage the roots to grow into the support structure and seek moisture from the watering layer underneath. The distance between two adjacent lengths of material may be between 5mm and 30mm. The multiplicity of lengths of the first material will typically be above and on top of the watering layer.

Above, it is mentioned that there may be lengths of first material arranged in a first direction and lengths of second material arranged in a second direction. Optionally, the angle between the first direction and the second direction is between 30 and 60 degrees. Preferably, the rafters and the multiplicity of lengths of the first material form a multiplicity of rectangular shapes and the multiplicity of the lengths of the second material is arranged in a direction diagonal to the rectangular.

The first material is preferably one that will withstand moisture without significant impact on its long-term structural integrity. For example, it is preferred that the material is not one which would be at risk of rotting in damp conditions over time. Optionally, the first material is plastic, for example, recycled plastic board. On a pitched roof, the support structure may be placed on the roof with one or more joints along the crest of the roof structure, thereby contacting the support structure with the waterproof structure and preventing the moving or sliding of the support structure without having to piecing through the waterproof structure.

The support structure may comprise material optionally provided as lengths of material, for example, the second material mentioned above, which comprises rubber. The material may be made from recycled tyre for example. The lengths of material (for example the second material mentioned above) may, for example, be in the form of recycled tyre treads that have had the curvature in them changed to make them less curved and more straight. One or more lengths of the material may, for example, be longer than 1m and wider than 100mm wide. Used car tyres are a problem to get rid of. The roof structure of at least some embodiments of the present invention re-uses the tread of a car tyre as part of the support structure. Tyre treads are relatively robust and tend not to degrade significantly and are thus well suited to the presently proposed purpose. The treads (for example the grooves that define the tread pattern) of the lengths of tyre preferably face upwards. This may help with the roots of the turf layer engaging with the support structure layer. Most turf roofs have a waterproof membrane as the external element of the support, which means they must not be punctured. Embodiments of the present invention have tyre treads as the external support, such that objects (like a PV panel) can easily be screwed to the roof without risking puncturing such a membrane. The lengths tyre treads may be screwed to a lower part of the roof structure (for example the first material mentioned above) like floorboards, optionally at a diagonal. There may be a multiplicity of recycled tyre treads arranged in lengths, substantially parallel to each other, each length having one end higher than the other end, such that the lengths collectively define a slope, the lengths also being arranged such that each length extends in a direction that is angled relative to the direction of the slope. There may be gaps between adjacent lengths of the material. Such gaps may be between 5mm and 20mm wide. As mentioned above, such gaps may encourage the roots of the turf to grow into the support structure and seek moisture from the watering layer underneath.

In one embodiment of the present invention, the second material of the supporting structure may be fixed to the first material of the supporting structure. In yet another embodiment of the present invention, the supporting structure may comprise lengths of material, for example made from used vehicle tyres, which are fixed relative to water pipes of the watering layer, for example by screws which may be screwed into (optionally penetrating through) the walls of the pipes.

In certain embodiments, the support structure may include gaps (preferably at least 5mm wide) to allow for the roots of the turf finish to easily find their way down from the turf finish to the watering layer.

Optionally, the gaps between the supporting structure and the turf finish may comprise one or more filling layers configured to retain water and/or to feed water to the turf finish. For example, the one or more filling layers may be of a material similar to or substantially the same as the material used for the watering layer, for example, a sponge-like material or a capillary mat.

In certain embodiments, the support structure (the material of which being preferably solid and rigid and therefore resistant to penetration) may be so shaped that there are no straight line gaps from one side of the support structure to the other (e.g. from the top side to the bottom side). Having no such straight line gaps may assist with protecting against vandalism or other damage to the waterproofing structure. In the case where the support structure comprises lengths of a first material and lengths of a second material, the lengths of material may overlap so that there are no straight line gaps. It may be that there are nevertheless non-straight routes for the roots of the turf finish to find their way down from the turf finish to the watering layer.

The support structure may comprise lengths of material that overlap, thus providing edges or contours allowing the turf finish to key onto, thus for example supporting the turf and allowing it to grip better to the roof.

Optionally, the roof structure may further comprise one or more ancillary roof-mounted structures, wherein the one or more roof mounted structures are mounted on the supporting structure. For example, the roof-mounted structure is a PV panel. The roof-mounted structure may be a TV aerial.

Optionally, the support structure further comprises a retaining net at the edge of the support structure for holding the turf finish in place. The retaining nets may further prevent the top soil and/or the turf finish from moving or sliding. The retaining nets may be attached to the support structure by screws. The retaining nets may also be removed once the roots of the turf finish are well established.

According to a second aspect of the present invention, there is provided a method for building a roof structure comprising:
applying a waterproofing structure on top of a building;
applying a watering layer on top of the waterproofing structure;
applying a support structure on top of the watering layer; and
covering the support structure with a turf finish.

According to a third aspect of the present invention, there is provided a method of watering a turf surface covering a roof structure as described herein. The method comprises feeding water to the roots of the turf surface from the watering layer.

According to a fourth aspect of the present invention, there is provided a method of collecting excess water from a roof structure as described herein. The method comprises removing water from the watering layer.

According to a fifth aspect of the present invention, there is provided a building comprising a roof structure described herein.

According to a sixth aspect of the present invention, there is provided a method of building a roof structure as described herein.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawings of which:
Figure 1 shows a cross-section view of a roof structure according to a first embodiment of the invention;
Figure 2 shows a waterproofing structure of the roof structure according to the first embodiment of the invention;
Figure 3 shows a support structure of the roof structure according to the first embodiment of the invention, and
Figure 4 shows a cross-section view of a roof structure according to a further embodiment of the invention.

### Detailed Description

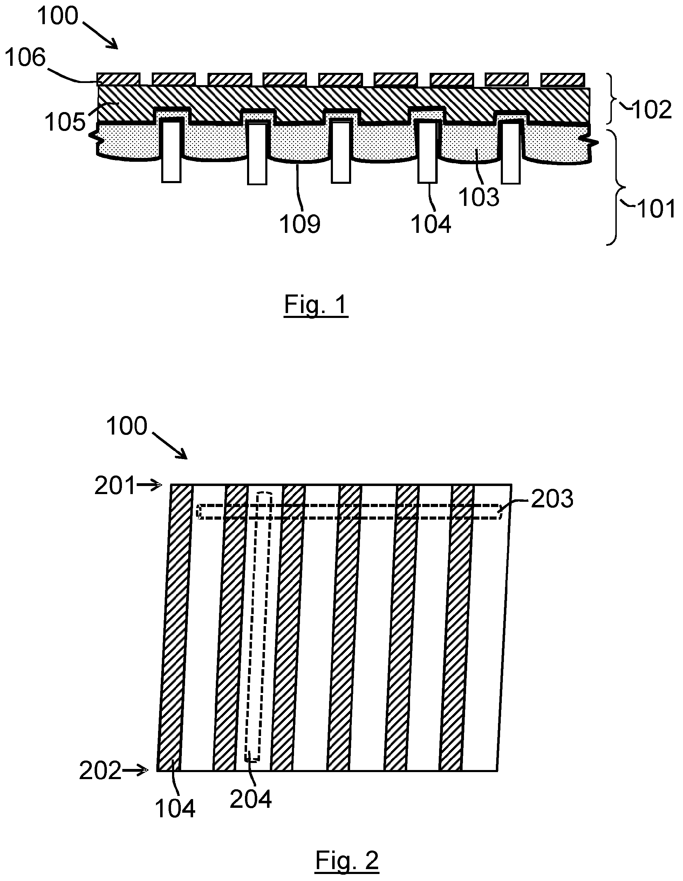

Referring to Fig 1, a roof structure 100 according to a first embodiment of the invention comprises a waterproofing structure 101 and a support structure 102 engaging with and being supported by the waterproofing structure 101. The waterproofing structure 101 includes a waterproof membrane 109. The support structure 102 is arranged to support top soil and a turf finish (not shown in Figure 1). Netting may be provided over the support structure 102 to aid support and retention of the top soil. The roof structure 100 also comprises a watering layer 103 arranged between the waterproofing structure 101 and the support structure 102 to retain and release water for the purpose of feeding the turf finish (not shown in Fig. 1).

The waterproofing structure 101 comprises a multiplicity of rafters 104. The rafters are arranged in parallel with each other and extend from the centre line 201 of the roof to the edge 202 of the roof, as shown in Fig. 2. The length of each rafter is thus substantially parallel with the slope of the roof. The waterproofing structure 101 further comprises watering pipes 203 and 204 (only two are shown in Fig. 2). Some of the pipes 203 are arranged to run along (adjacent to) the centre line 201 of the roof, and some others of the pipes 204 are arranged to run in a direction substantially parallel to the rafters 104. The walls of the pipes 203 and 204 comprise a multiplicity of holes (not shown in Fig. 2) to facilitate the release of water from the pipes at different positions across the roof.

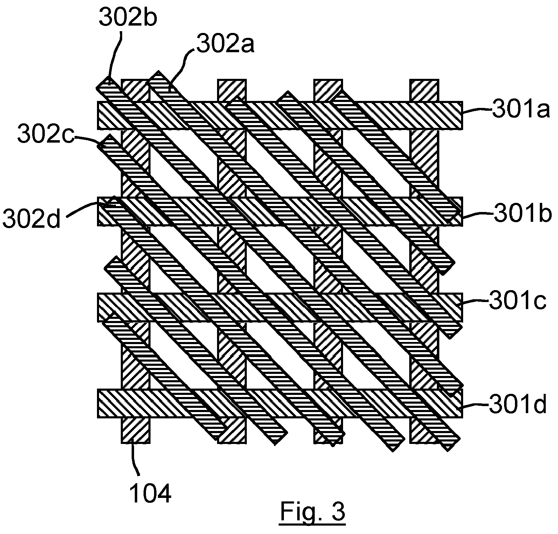

The watering layer 103 comprises a water-retaining sponge-like material. It is flexible so that it fills the gap between the waterproofing structure 101 and the support structure 102. As shown in Figure 1, the support structure 102 comprises a first layer 105 and a second layer 106 on top of the first layer 105. As shown in Figure 3, the first layer 105 comprises a multiplicity of lengths 301a to 301d of recycled plastic board. The multiplicity of lengths 301a to 301d of recycled plastic board run on top of and perpendicularly to the rafters 104. In particular, the boards 301 are notched along their length so as to straddle the rafters and pinch the waterproof membrane 109 and the sponge-like watering layer 103 in place (as shown in Figure 1). The plastic boards of the first layer 105 are fixed to the rafters 104 in part by frictional engagement. The second layer 106 comprises a multiplicity of lengths 302a to 302d of recycled tyre treads. Each tyre tread is made from cutting the tyre tread from a used vehicle tyre, and then flattening the tyre tread (for example by means of a heat/pressure treated and/or by means of forcing the cut tyre tread through a being machine) so that the flattened tyre tread has a length of about 2m and a width of about 150mm. The multiplicity of lengths 302a to 302d of tyre tread are arranged diagonally (in this case, at an angle of about 45 degrees) to the multiplicity of lengths 301a to 301d of recycled plastic board, and therefore also diagonally (in this case, at an angle of about 45 degrees) to the rafters 104. The lengths 302a to 302d of tyre tread are arranged with a gap in between each other of about 10mm. The lengths 302a to 302d of recycled tyre treads are fixed to the plastic boards of the first layer 105 by means of screws. The grooves that define the tyre tread face upwards and thus define channels which may hold water and/or soil, which in turn provides a good surface for roots of the grass turf to key onto. The gap between the lengths of recycled tyre treads enables a small amount of soil to fall through onto the sponge-like layer beneath. This encourages the roots to enter this crack and seek moisture in the sponge layer below. As the lengths 302a to 302d of recycled tyre treads are at a diagonal, this also means there is some resistance to the potential sliding of the grass, soil and roots, down the slope of the roof, especially if the roots of the grass has engaged well with the tyre tread pattern and the cracks between adjacent lengths of tyre treads.

In use, water (whether collected from rainwater or other sources) is distributed via the pipes to the sponge-like watering layer 103. Water is retained in the sponge-like layer and is over time taken up by the roots of the turf, or evaporates. Watering of the turf is thus achieved effectively by means of watering from below, not from above. The soil remains relatively moist and the risk of it drying out may be reduced. Less soil may be used as a result. The roof may as a result be less massive, per unit area, thus requiring a support structure which may be lighter than might otherwise be required when used to support a turf-based roof in an eco-build. The use of reused tyres in supporting the soil and facilitating root growth into and within the structure of the roof (by means of roots growing into the grooves that form the tyre treads and growing into the gaps between tyres) also provides the potential benefits of providing a means of re-using (re-purposing) used tyres and also assists in providing structural stability to the roof as a whole. Also, an arrangement in which the lengths of tyre treads are screwed to the plastic boards (which act as battens) and the plastic boards not being directly screwed to the rafters may help with maintaining the watertightness of the waterproof membrane that is supported on the rafters. If any item needs to be attached to the roof, for example a TV aerial or satellite dish, the item may be screwed to a tyre tread without fear of puncturing the waterproof membrane.

A second (non-illustrated) embodiment concerns a method of building a roof structure for, or on, an eco-build building. First, the main structure of the roof is constructed so that rafters are fixed in position and a ridge to the roof is defined. The rafters run from the ridge downwards with a slope of about 30 degrees to the horizontal. A waterproof membrane is then draped over the rafters, with a minor amount of sagging in the membrane between adjacent rafters. A water-absorbing / water-holding layer is then laid on top of the membrane. Pipe for distributing water over the roof are installed. The pipes have holes at various points along their length which are arranged to provide relatively even watering of the roof (accounting for the fact that water will tend to collect at the lower parts of the roof and drain faster from the higher points). Horizontal battens with cut-outs formed therein corresponding to the shape and position of the rafters are then mounted on top of the rafters, thus pinching and therefore holding the waterproof membrane and the water-absorbing / water-holding layer in place. Lengths of reused tyre treads are then screwed onto the horizontal battens, the lengths being spaced apart and arranged at 45 degrees both to the horizontal battens and the rafters. The gap between adjacent lengths of reused tyre treads is about 20mm. The lengths of reused tyre treads are so positioned that the grooves that define the tyre treads face upwards. A soil retaining net is then installed on the roof by nailing it to the lengths of reused tyre treads. A degree of slack is left in the net during that step so that when top soil is added in the next step, it settles into the gaps between the adjacent lengths of reused tyre treads. A turf layer is then laid on top. With time the roots establish and grow between the gaps between the adjacent lengths of reused tyre treads with at least some roots penetrating into the water-absorbing / water-holding layer. The water-absorbing / water-holding layer may be in the form of a hydroponic substrate, which allows for reducing the amount of top soil that is used. It may be that the weight of the turf finish is about 100 kg per square meter, or less, and that the thickness of the turf may thus be less than 100mm, using such a method. It will be appreciated that the method of the second embodiment could be adapted and used to make a roof as described above in relation to the first embodiment.

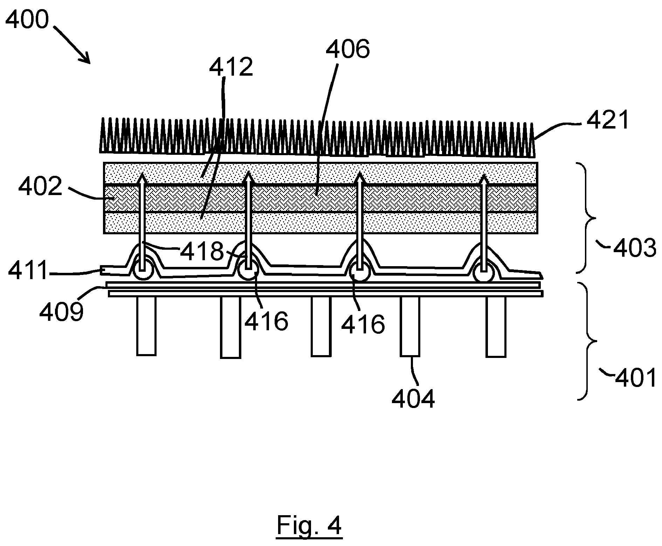

Fig 4 shows a section of a roof structure 400 according to a further embodiment of the invention comprises a waterproofing sub-structure 401, a turf support structure 402 which supports a turf finish 421 and a watering layer 403. The watering layer 403 is arranged between the waterproofing structure 401 and the turf finish 421 and is arranged to retain and release water for the purpose of feeding the turf finish 421. The waterproofing structure 401 includes a lower waterproof membrane 409 supported by a structure that includes a multiplicity of rafters 404. The watering later 403 includes an upper waterproof membrane 411 and watering pipes 416 which are arranged to run along the roof between the upper and lower waterproof membranes 409, 411. The support structure 402 is in the form of a layer of flattened vehicle tyre strips 406, laid side by side. Capillary mats 412 are provided to aid water retention and supply of water to the turf layer 421. Whilst not clearly shown in the schematic drawing of Fig 4, the mats are arranged such that each mat passes from beneath the later of tyre strips 406 to above, passing via gaps between adjacent tyre strips. The mats are thus arranged in an S-shape configuration. The tyre layer 406 is secured to the waterproofing sub-structure 401 by means of screws 418 that penetrate the pipes 416 and the upper waterproof membrane 411 but not the lower waterproof membrane 409. Water is then able to pass from the pipes 416 via the capillary mats 412 to the roots of the turf finish 421.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

Recycled carpet may be used instead of the sponge material mentioned above, as could other material, that is able to retain or absorb water and then later release it to the soil.

There may be a tie or other connection over the ridge of a roof in order to assist with holding the structure of the plastic boards, lengths of tyre treads, soil and turf in place relative to the rafters. Such a connection may connect the plastic boards on one side of the roof to the plastic boards on the opposite side of the roof (i.e. on the other side of a ridge of the roof). Such a connection may additionally, or alternatively, connect the lengths of tyre treads on one side of the roof to the lengths of tyre treads on the opposite side of the roof.

There may be two layers of tyre treads so that there is an upper layer which covers the gaps between the adjacent tyre treads in the lower layer. Roots between the turf layer and the watering layer may nevertheless be able to develop and grow. Having such an overlap may provide a key that assists retention of the turf layer key on the slope roof. Having such an overlap may also protect against damage to the waterproof layer.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A roof structure forming part of an eco-build building, the roof structure being covered with a turf finish, the roof structure comprising:
a waterproofing structure; and
a support structure, the support structure being arranged to support a turf finish;
wherein:
the roof structure comprises a watering layer, which is arranged between the waterproofing structure and the turf finish and which is arranged for supplying water to the turf finish.

2. A roof structure according to claim 1, wherein the roof structure is a pitched roof structure having a pitch of more than 15°.

3. A roof structure according to claim 1 or 2, wherein the waterproofing structure further comprises a multiplicity of rafters.

4. A roof structure according to any preceding claim, wherein the watering layer comprises an absorbent material.

5. A roof structure according to any preceding claim, wherein the roof structure further comprises one or more pipes arranged to feed water to the watering layer.

6. A roof structure according to any preceding claim, wherein the support structure comprises a first layer and a second layer, the first layer comprising a multiplicity of lengths of a first material, for example recycled plastic board, arranged in a first direction and the second layer comprising a multiplicity of lengths of a second material, for example recycled tyre, arranged in a second direction, and wherein:
the second direction is transverse to the first direction.

7. A roof structure according to claim 6, wherein the lengths of second material are arranged so that the distance between two adjacent lengths of material is between 5mm to 30mm.

8. A roof structure according to claim 6 or 7, wherein the support structure comprises a multiplicity of recycled tyre treads arranged in lengths, substantially parallel to each other, each length having one end higher than the other end, such that the lengths collectively define a slope, the lengths also being arranged such that each length extends in a direction that is angled relative to the direction of the slope.

9. A roof structure according to claim 7 or claim 8, wherein the treads of the lengths of tyre face upwards.

10. A roof structure according to any preceding claim, wherein the weight of the turf finish is equal to or less than 200 kg per square meter and/or the turf finish comprises a soil layer having a maximum thickness of no more than 100mm.

11. A method for building a roof structure comprising:
applying a waterproof layer on top of a building;
applying a watering layer on top of the waterproof layer;
applying a support structure on top of the watering layer; and
covering the support structure with a turf finish.

12. A method of watering a turf surface covering a roof structure according to any one of claims 1 to 10, comprising supplying water to the watering layer so that water feeds the roots of the turf surface.

13. A method of collecting excess water from a roof structure according to any one of claims 1 to 10, comprising removing water from the watering layer, and optionally performing the method of claim 12.

14. A building comprising a roof structure according to any of claims 1 to 10 or one made by performing the method of claim 11.

15. A kit of parts for forming a roof structure according to any of claims 1 to 10, the kit comprising parts for forming the waterproofing structure, the watering layer and the support structure of the roof structure, and optionally lengths of tyre treads for forming at least part of the roof structure.
